# EUROPEAN PATENT APPLICATION

(11) **EP 1 837 584 A2**
(43) Date of publication of application: **26.09.2007**
(21) Application number: 07005972.0
(22) Date of filing: 22.03.2007
(51) Int. Cl.: F16M 13/02

(54) **Automatic wall mounting system for wall-mounted tv**

(30) Priority: 23.03.2006 KR 20060026532
(71) Applicant: Keyang Electric Machinery Co., Ltd., Jung-gu Seoul 100-080 (KR)
(72) Inventor: Chun, Hyung Hwan, Suwon-si, Gyeonggi-do 443-780 (KR); Lee, Hyoung Ho, Bucheon-si, Gyeonggi-do 420-709 (KR); Cho, Ju Yeon, Yongin-si, Gyeonggi-do 448-130 (KR)
(74) Representative: Schumacher & Willsau

(57) **Abstract**

Provided is an automatic wall mounting system for a wall-mounted television (TV). The system includes a fixing plate (10), an elevating plate (20), and an elevation manipulation unit (30). The fixing plate (10) is fixingly mounted on a wall body and has fixing rails and sliders at its both side ends. The sliders slide on the fixing rails. The elevating plate (20) is coupled at its both side ends to the sliders of the fixing plate, and mounts the TV in its front. The elevation manipulation unit (30) is coupled to each of the fixing plate (10) and the elevating plate (20), and elevates or descends the elevating plate about the fixing plate.

## Description

### BACKGROUND OF THE INVENTION

### Field of the Invention

The present invention relates to an automatic wall mounting system for a wall-mounted television (TV), and more particularly, to an automatic wall mounting system for a wall-mounted TV, for automatically controlling a screen height of the TV at a viewer's eye level.

### Description of the Related Art

In general, large-sizing and slimness of Liquid Crystal Display (LCD) and Plasma Display Panel (PDP) televisions (TVs) result in the popularization of a wall-mounted TV mounted on a wall as an alternative for positioning the TV by a height suitable for viewer's TV watching as well as securing interior spaces.

The wall-mounted TV is of a general type in which it is built in and fixed to a wall surface by a coupling means such as a bolt, or it is mounted in front of an elevation bracket installed on a wall surface such that that a viewer can control a screen height of the TV in a manual manner.

Among the related-art TV installation methods, however, a built-in installation method has a drawback that it is impossible to control the screen position of the TV at a viewer's eye level. A bracket based installation method causes troublesomeness that the viewer should directly control the screen position of the TV in the manual manner, though he/she can control the screen height.

### SUMMARY OF THE INVENTION

An aspect of exemplary embodiments of the present invention is to address at least the problems and/or disadvantages and to provide at least the advantages described below. Accordingly, an aspect of exemplary embodiments of the present invention is to provide an automatic wall mounting system for a wall-mounted television (TV), for automatically controlling a screen height of the TV at a viewer's eye level in a remote place, thereby providing an optimal screen position to a viewer in real time while enabling a prompt, simple, and convenient control of the screen height by automation.

According to one aspect of exemplary embodiments of the present invention, there is provided an automatic wall mounting system for a wall-mounted television (TV). The system includes a fixing plate, an elevating plate, and an elevation manipulation unit. The fixing plate is fixingly mounted on a wall body and has fixing rails and sliders at its both side ends. The sliders slide on the fixing rails. The elevating plate is coupled at its both side ends to the sliders of the fixing plate, and mounts the TV in its front. The elevation manipulation unit is coupled to each of the fixing plate and the elevating plate, and elevates or descends the elevating plate about the fixing plate.

The elevation manipulation unit includes a motor, a gear box, a lead screw, and a lead nut. The motor is provided at a central part of the elevating plate, and has a rod axially rotating. The gear box is provided at an end of the rod of the motor, and converts an axial rotation force of the rod into a vertical rotation force. The lead screw connects at its one end with the rod through the gear box, and extends at the other end to an upper side of the elevating plate. The lead nut is spirally coupled with the lead screw and is fixingly coupled to the fixing plate, and enables the lead screw to spirally move in an up and down direction as the lead screw rotates.

The rods of the motor may protrude from both sides of the motor, thereby providing a coupling structure among the gear box, the lead screw, and the lead nut each having the same construction.

The gear box may connect the lead screw with the rod in a worm gear manner.

The elevating plate may have a screw support at its predetermined part. The screw support may cover an upper part of the lead screw, and rotatably support the lead screw.

### BRIEF DESCRIPTION OF THE DRAWINGS

The accompanying drawings, which are included to aid in The above and other objects, features and advantages of the present invention will become more apparent from the following detailed description when taken in conjunction with the accompanying drawings in which:

FIG. 1 is a perspective view illustrating a fixing plate of an automatic wall mounting system for a wall-mounted television (TV) according to an exemplary embodiment of the present invention;

FIG. 2A is a perspective view illustrating an elevating plate of an automatic wall mounting system for a wall-mounted television TV according to an exemplary embodiment of the present invention;

FIG. 2B is a rear view illustrating an elevating plate of an automatic wall mounting system for a wall-mounted TV according to an exemplary embodiment of the present invention;

FIG. 3A is a perspective view illustrating an elevation manipulation unit of an automatic wall mounting system for a wall-mounted TV according to an exemplary embodiment of the present invention;

FIG. 3B is a front view illustrating an elevation manipulation unit of an automatic wall mounting system for a wall-mounted TV according to an exemplary embodiment of the present invention;

FIG. 4 is an exploded perspective view illustrating an automatic wall mounting system for a wall-mounted TV according to an exemplary embodiment of the present invention;

FIG. 5 is a front view illustrating an assembly state of an automatic wall mounting system for a wall-mounted TV according to an exemplary embodiment of the present invention; and

FIG. 6 is a schematic side view illustrating an operation state of an automatic wall mounting system for a wall-mounted TV according to an exemplary embodiment of the present invention.

Throughout the drawings, the same drawing reference numerals will be understood to refer to the same elements, features and structures.

### DETAILED DESCRIPTION OF THE INVENTION

Exemplary embodiments of the present invention will now be described in detail with reference to the annexed drawings. In the following description, a detailed description of known functions and configurations incorporated herein has been omitted for conciseness.

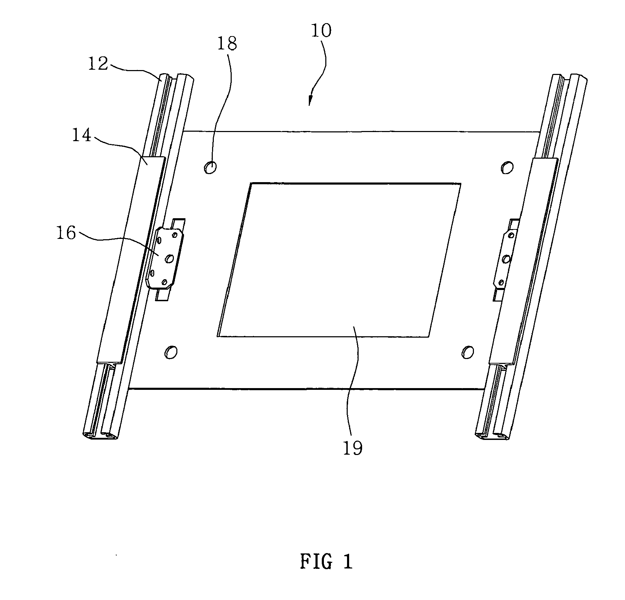

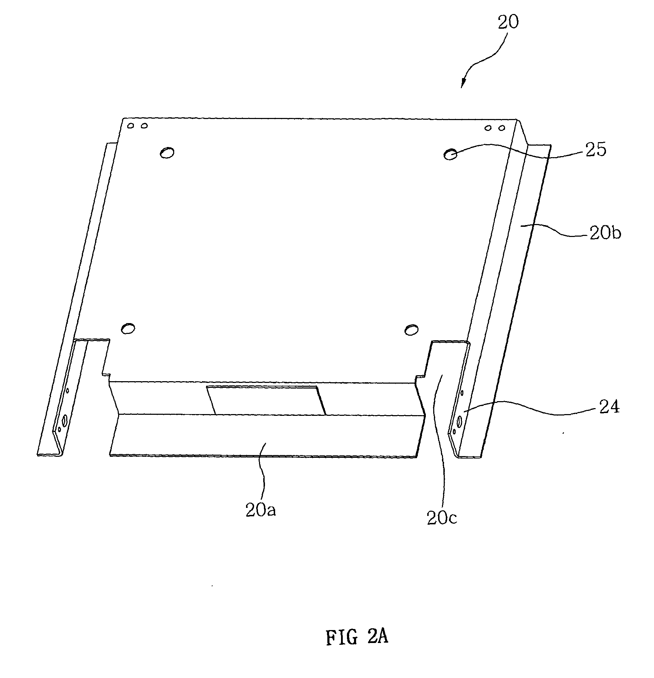

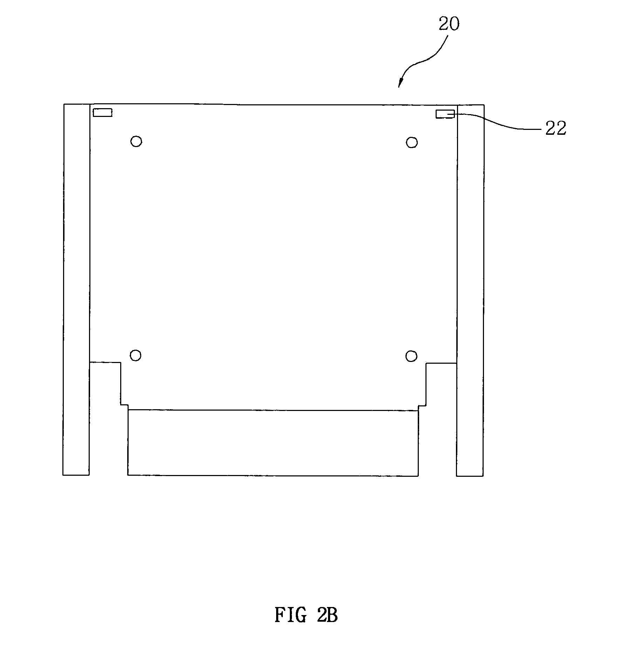

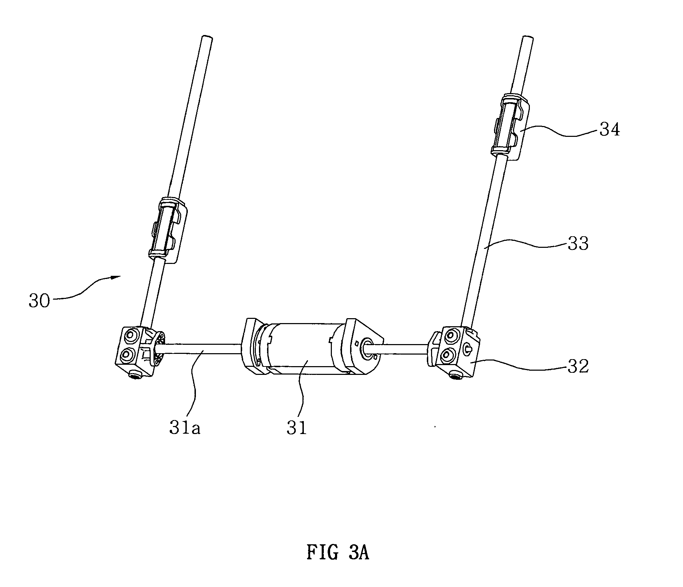

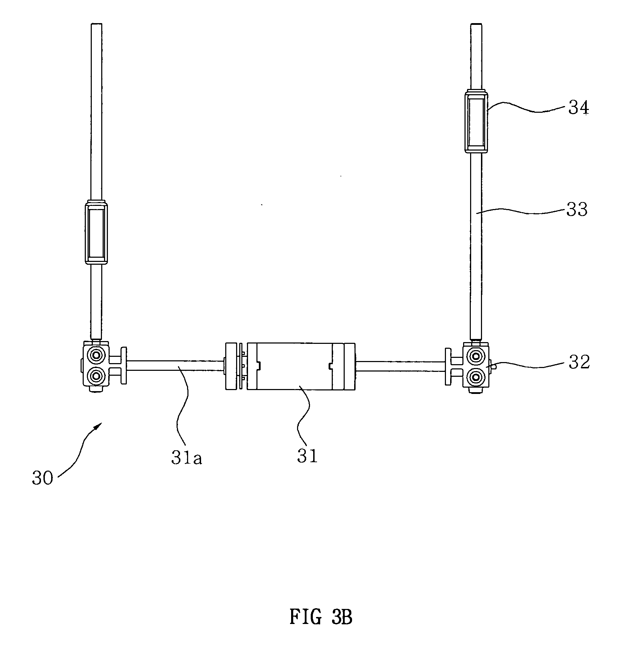

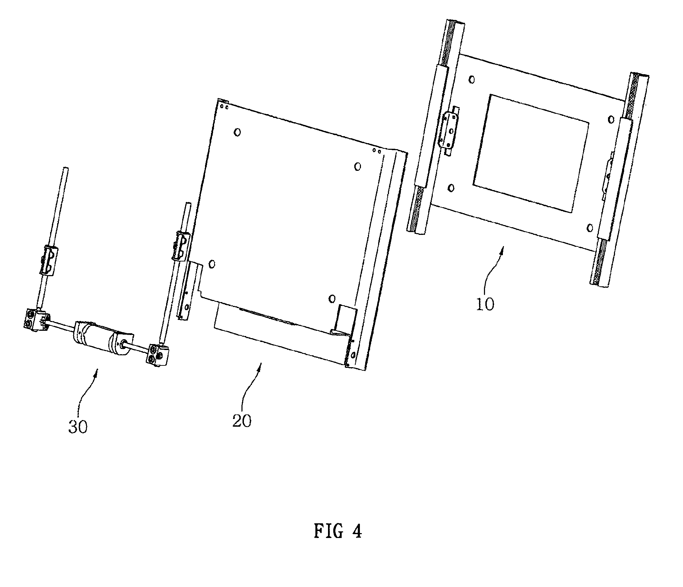

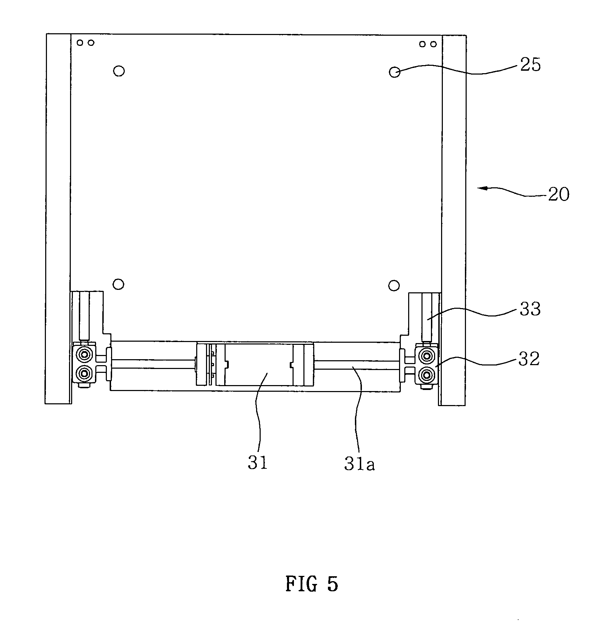

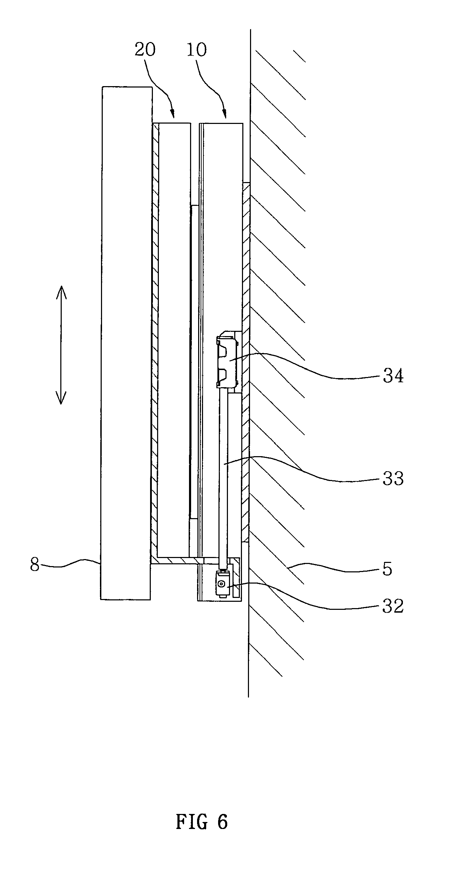

As shown in FIGS. 1 to 6, an automatic wall mounting system for a wall-mounted television (TV) according to an exemplary embodiment of the present invention includes a fixing plate 10 fixingly mounted on a wall body 5, and having fixing rails 12 and sliders 14 at its both side ends, the sliders 14 sliding on the fixing rails 12; an elevating plate 20 coupled at its both side ends to the sliders 14 of the fixing plate 10, and having a television (TV) 8 in its front; and an elevation manipulation unit 30 coupled to each of the fixing plate 10 and the elevating plate 20, and elevating or descending the elevating plate 20 about the fixing plate 10.

The fixing plate 10 is of a shape in which a rectangular iron plate is fixingly mounted on the wall body 5. The fixing plate 10 has the fixing rails 12 at its both sides. The fixing plate 10 has the sliders 14 slidably coupled to the fixing rails 12 and sliding up/down on the fixing rails 12.

"L"-bracket shaped nut fixing parts 16 for fixing lead nuts 34 are attached onto the fixing plate 10 adjacently to and at inner sides of the fixing rails 12. Coupling holes 18 for coupling predetermined coupling members (not shown) such as bolts are provided at upper and lower parts of the fixing plate 10 adjacently to and at inner sides of the nut fixing parts 16.

The fixing plate 10 is partially cut away at its central part and thus has a through-hole 19 for raw material saving because its central part serves no role.

The elevating plate 20 is of a rectangular plate shape in which it is bent and stepped at a lower end and both ends. A motor 31 of the elevation manipulation unit 30 is installed at a lower-end bent part 20a, and the sliders 14 of the fixing plate 10 are coupled with both-end bent parts 20b. In particular, the lower-end bent part 20a is cut away at its both ends and thus has a screw insertion part 20c such that a lead screw 33 of the elevation manipulation unit 30 is inserted into the screw insertion part 20c and is disposed in rear of the elevating plate 20.

The elevating plate 20 has screw supports 22 at each of both-side upper and rear parts. The screw supports 22 cover upper parts of the lead screws 33, and support the lead screws 33 such that the lead screws 33 can axially rotate.

A gear box fixing part 24 is provided at a portion corresponding to an outer side surface of the screw insertion part 20c of the elevating plate 20. The gear box fixing part 24 fixes a gear box 32 of the elevation manipulation unit 30.

Coupling holes 25 for fixingly mounting the TV 8 through a separate coupling hole (not shown) are provided at four corners of a central flat part of the elevating plate 20.

The elevation manipulation unit 30 includes a motor 31 provided at a central part of the elevating plate 20, and having a cylindrical rod 31a axially rotating in forward and reverse directions; the gear box 32 provided at an end of the rod 31a of the motor 31, and converting an axial rotation force of the rod 31a into a vertical rotation force; a cylindrical lead screw 33 connecting at its one end with the rod 31a through the gear box 32 and extending at the other end to an upper side of the elevating plate 20, and having a screw thread on its circumferential surface; and a rectangular box shaped lead nut 34 spirally coupled with the lead screw 33 and fixingly coupled to the fixing plate 10, and opened at its axial center and upper surface such that the lead screw 33 spirally moves in an up and down direction as rotating.

The rods 31a of the motor 31 protrude from both sides of the motor 31, thereby providing a coupling structure among the gear box 32, the lead screw 33, and the lead nut 34 each having the same construction.

It is desirable that the gear box 32 connects the lead screw 33 with the rod 31a in a worm gear manner. In detail, worm gears connect to ends of the rod 31a and the lead screw 33 that interconnect with each other. The worm gears are geared with each other, and transmit the rotation force of the rod 31a to the lead screw 33 disposed in a vertical direction.

In addition to the worm gear, the gear box 32 can apply a combination of various gears such as a rack pinion gear or a bevel gear for converting the rotation force into the vertical rotation force.

The automatic wall mounting system for a wall-mounted television TV according to an exemplary embodiment of the present invention is completely assembled as follows. First, the fixing plate 10 is fixed to the wall body 5. Next, the elevation manipulation unit 30 is installed by disposing the lead screws 33 in rear of the elevating plate 20. After that, the both-end bent parts 20b of the elevating plate 20 are coupled to the sliders 14 of the fixing plate 10. At the same time, the lead nuts 34 screwed and coupled with the lead screws 33 of the elevation manipulation unit 30 are fixingly coupled to the nut fixing parts 16 of the fixing plate 10. Finally, the TV 8 is fixingly mounted via the front coupling holes 25 of the elevating plate 20.

In this state, a viewer can control the screen height of the TV 8 at his/her eye level in a remote place, using a remote controller.

For example, when it is intended to control the screen height of the TV 8, the motor 31 is driven to rotate the rod 31a in a desired direction. The rotation force of the rod 31a causes rotation of the lead screw 33 that is disposed in the vertical direction through the gear box 32. This results in spiral movement of the lead screw 33 about the lead nut 34 that is fixed to the fixing plate 10. Finally, the spiral movement causes the elevating or descending of the elevating plate 20 integrally connecting with the lead screw 33 in a desired direction, thereby controlling the screen height of the TV 8.

As described above, the automatic wall mounting system for a wall-mounted television TV has an effect of automatically controlling the screen height of the TV at the viewer's eye level in the remote place, thereby providing the optimal screen position to the viewer in real time while enabling a prompt, simple, and convenient control of the screen height by automation.

While the invention has been shown and described with reference to a certain preferred embodiment thereof, it will be understood by those skilled in the art that various changes in form and details may be made therein without departing from the spirit and scope of the invention as defined by the appended claims.

## Claims

1. An automatic wall mounting system for a wall-mounted television (TV), the system comprising:
a fixing plate fixingly mounted on a wall body and having fixing rails and sliders at its both side ends, the sliders sliding on the fixing rails;
an elevating plate coupled at its both side ends to the sliders of the fixing plate, and mounting the TV in its front; and
an elevation manipulation unit coupled to each of the fixing plate and the elevating plate, and elevating or descending the elevating plate about the fixing plate.

2. The system of claim 1, wherein the elevation manipulation unit 30 comprises:
a motor provided at a central part of the elevating plate, and having a rod axially rotating;
a gear box provided at an end of the rod of the motor, and converting an axial rotation force of the rod into a vertical rotation force;
a lead screw connecting at its one end with the rod through the gear box, and extending at the other end to an upper side of the elevating plate; and
a lead nut spirally coupled with the lead screw and fixingly coupled to the fixing plate, and enabling the lead screw to spirally move in an up and down direction as the lead screw rotates.

3. The system of claim 2, wherein the rods of the motor protrude from both sides of the motor, thereby providing a coupling structure among the gear box, the lead screw, and the lead nut each having the same construction.

4. The system of claim 2 or 3, wherein the gear box connects the lead screw with the rod in a worm gear manner.

5. The system of claim 4, wherein the elevating plate has a screw support at its predetermined part, and
wherein the screw support covers an upper part of the lead screw, and rotatably supports the lead screw.
